# EUROPÄISCHE PATENTSCHRIFT

(11) **EP 0 583 015 B1**
(45) Veröffentlichungstag und Bekanntmachung des Hinweises auf die Patenterteilung: **06.11.1996**
(21) Anmeldenummer: 93114971.0
(22) Anmeldetag: 08.02.1990
(51) Int. Cl.: G02F 1/1341

(54) **Verfahren zur Blasenentfernung aus einer mit Flüssigkristallmaterial gefüllten Zelle**
Method for removing bubbles from a filled liquid crystal cell
Procédé d'élimination des bulbes d'une cellule remplie de matière cristal liquide

(30) Priorität: 11.02.1989 DE 3904126
(43) Veröffentlichungstag der Anmeldung: 16.02.1994
(62) Teilanmeldung aus: 90102463.8
(73) Patentinhaber: Nokia (Deutschland) GmbH, D-75175 Pforzheim (DE)
(72) Erfinder: Brosig, Stefan, Dr., D-70563 Stuttgart 80 (DE); Waldmann, Jürgen, Dr., D-71171 Schönaich (DE); Stoitzner, Monika, D-72622 Nürtingen (DE); Barnaba, Martin, D-70376 Stuttgart 50 (DE); Wirsig, Hans-Jörg, D-70806 Kornwestheim (DE); Thaler, Helmut, D-73265 Dettingen (DE)

(56) Entgegenhaltungen:
- FR-A- 2 383 494
- PATENT ABSTRACTS OF JAPAN vol. 12, no. 224 (P-721) & JP-A-63 018 326
- PATENT ABSTRACTS OF JAPAN vol. 5, no. 081 (P-063) & JP-A-56 029 212

## Beschreibung

### Technisches Gebiet

Die Erfindung betrifft ein Verfahren zum Entfernen von Blasen aus einer mit Flüssigkristallmaterial gefüllten Zelle.

### Stand der Technik

Im Rahmen bekannter Herstellverfahren von Zellenplatten von beispielsweise Flüssigkristallzellen sind Schleudervorgänge zur Schichtausbildung bekannt. Dazu wird eine einzelne Zellenplatte oder eine Vielzahl noch nicht voneinander getrennter Zellenplatten mit einem aufzubringenden Material in flüssiger Form versehen und dann wird die Platte geschleudert, damit nur ein dünner Flüssigkeitsfilm zurückbleibt, aus dem durch Verdunsten eines Lösungsmittels eine feste Schicht entsteht. Diese Schicht kann z. B. eine Orientierungsschicht, eine Isolierschicht oder eine Fotolackschicht sein.
Zur Filmbildung wird die jeweilige Platte üblicherweise mittig auf einem Drehteller angeordnet. Bevor der Drehteller in Rotation versetzt wird, wird eine vorbestimmte Menge des Beschichtungsmaterials auf die Oberfläche der Platte aufgebracht, die gegenüber der Oberfläche ist, mit der die Platte auf dem Drehteller aufliegt. Eine der vorstehenden Erörterung entsprechende Verfahrensführung ist beispielsweise aus der Schrift JP-A-61-162465 bekannt. Hierneben sind ferner auch Verfahrensführungen zum Ausbilden von Schichten auf Substratplatten bekannt, bei welchen die jeweilige Substratplatte konzentrisch zur Drehachse angeordnet ist. Eine solche Verfahrensführung ist etwa in der Schrift FR-A-2383494 angegeben.

Im Zusammenhang mit der Schrift JP-A-61-162465 wird darauf hingewiesen, daß die zu bildende Schichtanordnung durch Anwendung der Drehung blasenfrei ausgebildet wird. Erreicht wird dies dadurch, daß das Schichtbildungmaterial klecksförmig auf die Substratplatte aufgebracht wird. Sodann wird dieser Materialklecks mit einer weiteren Platte abgedeckt. Wird nun die Drehanordnung in Rotation versetzt, wird unter Wirkung der Fliehkräfte der Klecks über die gesamte Plattenoberfläche verteilt, wobei überschüssiges Material am Rand zwischen beiden Platten heraustritt. Gleichzeitig wird die auf den Klecks aufgelegte Platte unter Wirkung der Adhäsions- und Saugkräfte in Richtung auf die auf dem Drehteller aufliegende Platte gezogen. Bedingt durch die Fließgeschwindigkeit des zwischen den beiden Platten herausströmenden Materials, werden im Material vorhandene Gasblasen nicht entsprechend der Fliehkraftwirkung zur Drehachse bewegt, sondern vom nach außen strömenden Material mitgerissen. Eine völlig blasenfreie Schichtbildung kann aber nicht erreicht werden, denn - da mit Materialüberschuß gearbeitet wird - kann eine völlig blasenfreie Schicht nur gebildet werden, wenn das Restmaterialvolumen, welches die Schicht letztlich bildet, selbst blasenfrei war. Außerdem wird darauf hingewiesen, daß Gasblasen, welche im Materialklecks nahe der Drehachse des Drehtellers angeordnet sind, nicht entfernbar sind.

Sind die eben beschriebenen Substratplatten zu einer Zelle montiert und mit Flüssigkristallmaterial gefüllt, ist es für die Qualität der Zelle entscheidend, daß das Flüssgkristallmaterial, welches im Bereich des für einen Betrachter bestimmten Teils der Zelle eingeschlossen ist, blasenfrei ist. Gemäß dem Stand der Technik versuchte man diese Blasenfreiheit dadurch zu erreichen, daß man die Zellen senkrecht stellte und erwärmte, um die Blasen in einem für den späteren Betrachter der Zelle nicht sichbaren Teil der Zelle zu drängen. Nur für verhältnismäßig große Blasen gelang es auf diese Art und Weise, Blasen an den Rand zu bewegen. Auch ist dieses Verfahren sehr zeitintensiv.
Daher liegt der Erfindung die Aufgabe zugrunde ein Verfahren anzugeben, welches es erlaubt, schnell und vollständig Blasen im Flüssigkristallmaterial aus dem für einen späteren Betrachter sichtbaren Teil der Zelle zu entfernen.

### Darstellung der Erfindung

Diese Aufgabe wird dadurch gelöst, daß die mit Flüssigkristallmaterial befüllte und hermetrisch verschlossene Zelle um eine Schleuder-Drehachse geschleudert wird, wobei die Zelle so in bezug auf die Schleuder-Drehachse (14) angeordnet wird, daß die Drehachse entweder durch einen Rand der Zelle geht oder außerhalb der Zelle liegt. Durch den dann gegebenen Unterschied der Rotationsgeschwindigkeiten zwischen dem der Drehachse nahen Rand und dem gegenüberliegenden Rand können die Blasen in einen der Drehachse nahen und bei der späteren Verwendung der Zelle nicht sichtbaren Zellenbereich bewegt werden.

### Kurze Darstellung der Figuren

Es zeigen:
- Fig. 1: eine Perspektive einer mit Flüssigkristall gefüllten Zelle und
- Fig. 2: eine schematische Darstellung einer Anordnung zur Ausführung des Verfahrens.

### Wege zum Ausführen der Erfindung

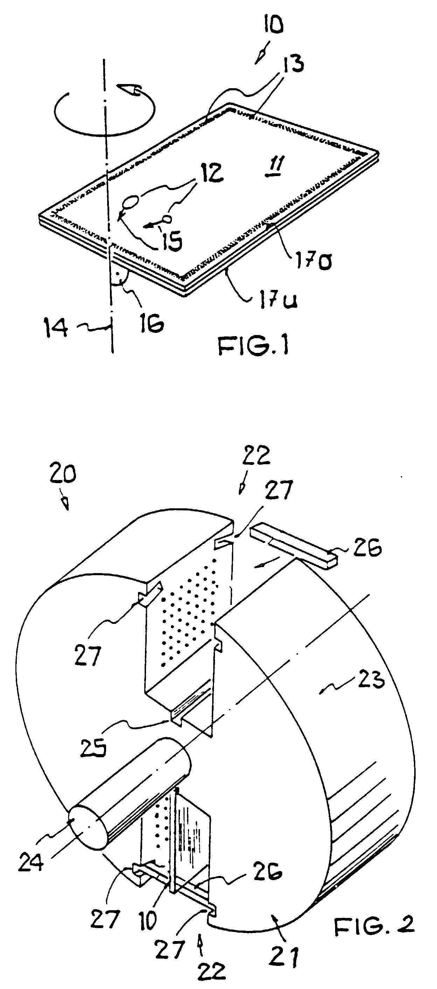

Die in Fig. 1 dargestellte Flüssigkristallzelle 10 enthält zwischen einer oberen Zellenplatte 17.o und einer unteren Zellenplatte 17.u einen Flüssigkristall 11, in dem zwei Gasblasen 12 eingeschlossen sind. Der zwischen den Zellenplatten eingeschlossene Flüssigkristall 11 wird durch einen Kleberrrand 13 am Herauslaufen aus dem Bereich zwischen den Zellenplatten 17.o , 17.u gehindert. Der Bereich, in dem der Kleberrand 13 vorhanden ist und ein ins Zelleninnere hin dicht benachbarter Bereich sind bei einem fertigen Display nicht mehr sichtbar, da dieser Bereich zumeist von einem Abdeckrand (nicht dargestellt) überdeckt ist.

Dieser später beim fertigen Display nicht mehr sichtbare Bereich einer Zelle oder einer einzelnen Zellenplatte wird im folgenden als "nicht sichtbarer Bereich" bezeichnet. Der innerhalb von diesem nicht sichtbaren Bereich liegende Bereich ist der "sichtbare Bereich", also der Bereich, in welchem ein späterer Betrachter des Displays die Bildinformation erkennt.

Die Flüssigkristallzelle 10 gemäß Fig. 1 ist an einer nicht dargestellten Schleudervorrichtung befestigt. Es ist lediglich die Schleuder-Drehachse 14 der Vorrichtung dargestellt. Die Flüssigkristallzelle 10 ist so in bezug auf die Schleuder-Drehachse 14 angeordnet, daß letztere gerade durch einen Rand der Zelle geht. Wird nun die Zelle 10 um diese Schleuder-Drehachse 14 schnell gedreht, wirken Zentrifugalkräfte auf den Flüssigkristall 11, was bewirkt, daß sich die Gasblasen 12 in Richtung auf denjenigen Rand zu bewegen, dem die Schleuder-Drehachse (14) benachbart ist. die Bewegung der Gasblasen 12 ist durch Bewegungspfeile 15 angedeutet.

Bei der Anordnung gemäß Fig. 1 beträgt der Ausrichtwinkel 16 zwischen der Schleuder-Drehachse 14 und der Flüssigkristallzelle 10 in etwa 90°. Der Ausrichtwinkel 16 kann jedoch beliebig sein, also z. B. auch 0° betragen, wie es bei der im folgenden erläuterten Anordnung gemäß Fig. 2 der Fall ist. Wichtig beim "Herausschleudern" von Gasblasen 12 ist nur, daß der Bereich des Displays, in den die Gasblasen 12 bewegt werden sollen, die geringste Rotationsgeschwindigkeit aufweist. In der Ausführung gemäß Figur 1 ist diese Bedingung dadurch erfüllt, daß die Schleuder-Drehachse 14 durch den Rand der Zelle 10, also einen später für einen Betrachter nicht mehr sichtbaren Teil der Zelle 10 geht.

In Fig. 2 ist ein Ausführungsbeispiel einer konkreten Schleudervorrichtung 20 zum Ausführen des anhand von Fig. 1 erläuterten Verfahrens dargestellt. Wesentliches Bauteil der Schleudervorrichtung 20 ist ein Kreiszylinderrad 21 mit zwei Schlitzen 22, die von nahe der Mitte des Kreiszylinderrades 21 ausgehen und in den kreiszylindrischen Mantel 23 des Rades 21 geöffnet sind. Durch die Mitte des Rades 21 geht eine Lagerwelle 24, die die körperliche Realisierung der Schleuder-Drehachse 14 darstellt.

Jeder der beiden gegenüberliegenden Schlitze 22 weist an seinem Boden eine Nut 25 zum Einsetzen des Randes einer Zelle 10 auf. Eine eingesetzte Zelle 10 ist in dem in der Darstellung gemäß Fig. 2 gerade unten liegenden Schlitz vorhanden. Der in die Nut 25 eingesetzte Rand ist derjenige, der bei der schematischen Darstellung gemäß Fig. 1 der Schleuder-Drehachse (14) am dichtesten benachbart ist. Abweichend zur Darstellung gemäß Fig. 1 verläuft in Fig. 2 die Drehachse 14,24 parallel zur Ebene der Zellenplatte 10, wobei zwischen Drehachse 14, 24 und in die Nut 25 eingesetzter Zellenplatte 10 ein Abstand eingehalten ist.

Um die eingesetzte Zelle 10 daran zu hindern, daß sie bei schneller Rotation des Kreiszylinderrades (21) herausgeschleudert wird, ist ihr dem Mantel (23) benachbartes Ende durch Haltestäbe 26 abgestützt. Diese Haltestäbe 26 werden in Vertiefungen 27 in den Schlitzwänden eingeschoben, nachdem eine Zelle 10 in die zugehörige Nut 25 eingesetzt ist.

Wird eine Anordnung 20 mit eingesetzter Zelle 10 in Rotation versetzt, drängen die in dem Flüssigkristallmaterial der Zelle 10 vorhandenen Gasblasen (in Figur 2 nicht dargestellt) zu dem Rand der Zelle 10, mit welchem diese in die Nut 25 eingesetzt ist.

## Patentansprüche

1. Verfahren zum Entfernen von Gasblasen aus einer mit Flüssigkristallmaterial (11) gefüllten Zelle (10), wobei zum Verschieben von Blasen (12) die Zelle (10) um eine Schleuder-Drehachse (14) geschleudert wird,
**dadurch gekennzeichnet**,
daß die Zelle (10) so in bezug auf die Schleuder-Drehachse (14) angeordnet wird, daß diese außerhalb der Zelle (10) liegt oder
daß die Schleuder-Drehachse (14) durch einen Rand der Zelle (10) geht, so daß die Blasen (12) in einen bei der späteren Verwendung der Zelle (10) nicht sichtbaren Zellenbereich bewegt werden.

## Claims

1. Process for removing gas bubbles from a cell (10) filled with liquid crystal material (11), in which, in order to displace bubbles, the cell (10) is spun about an axis of rotation (14) of a centrifuge,
**characterised in**
that the cell (10) is arranged with reference to the axis of rotation (14) of the centrifuge so that said axis of rotation lies outside the cell (10), or
that the axis of rotation (14) of the centrifuge passes through one edge of the cell (10) so that the bubbles (12) are moved to a region of the cell which is not visible when the cell (10) is subsequently used.

## Revendications

1. Procédé pour l'élimination de bulles gazeuses d'une cellule (10) emplie de cristal liquide (11), dans lequel, pour déplacer des bulles (12), la cellule (10) est centrifugée autour d'un axe de rotation de centrifugation (14), caractérisé en ce que la cellule (10) est disposée de telle façon par rapport à l'axe de rotation de centrifugation (14) que celui-ci se situe en dehors de la cellule (10) ou que l'axe de rotation de centrifugation (14) passe par un bord de la cellule (10), de sorte que les bulles (12) sont déplacées vers une région de la cellule non visible lors de l'utilisation ultérieure de la cellule (10).
